# EUROPÄISCHE PATENTSCHRIFT

(11) **EP 3 200 654 B1**
(45) Veröffentlichungstag und Bekanntmachung des Hinweises auf die Patenterteilung: **14.08.2019**
(21) Anmeldenummer: 15770498.2
(22) Anmeldetag: 22.09.2015
(51) Int. Cl.: A47B 88/497

(54) **FÜHRUNGSVORRICHTUNG**
GUIDE DEVICE
DISPOSITIF DE GUIDAGE

(30) Priorität: 02.10.2014 DE 102014220049
(43) Veröffentlichungstag der Anmeldung: 09.08.2017
(73) Patentinhaber: Schock Metallwerk GmbH, 73660 Urbach (DE)
(72) Erfinder: ZIMMERMANN, Joachim, 73614 Schorndorf (DE)
(74) Vertreter: Hoeger, Stellrecht & Partner Patentanwälte mbB
(86) Internationale Anmeldenummer: PCT/EP2015/071769
(87) Internationale Veröffentlichungsnummer: WO 2016/050568

(56) Entgegenhaltungen:
- EP-A1- 1 470 771
- US-A- 2 003 549
- US-E- R E23 461

## Beschreibung

Die vorliegende Erfindung betrifft eine Führungsvorrichtung, beispielsweise für Möbel- und Maschinenteile. Beispielsweise kann eine Führungsvorrichtung in einem Fahrzeuginnenraum von Kraftfahrzeugen an verschiebbaren Abdeckungen, etc. Anwendung finden.

Führungsvorrichtungen sind beispielsweise aus der US R E23,461 E, der US 2,300,549 A sowie der EP 1 470 771 A1 bekannt.

Der vorliegenden Erfindung liegt die Aufgabe zugrunde, eine Führungsvorrichtung bereitzustellen, welche einfach herstellbar ist und eine zuverlässige und stabile Führung zweier relativ zueinander beweglicher Elemente ermöglicht.

Diese Aufgabe wird erfindungsgemäß durch eine Führungsvorrichtung mit den Merkmalen des Anspruchs 1 gelöst.

Dadurch, dass die erfindungsgemäße Führungsvorrichtung eine Anpressvorrichtung umfasst, kann mindestens ein Paar von einander gegenüberliegend angeordneten Gleitflächen zuverlässig und stabil an mindestens ein Paar von Anlageflächen der Führungsschiene angepresst werden. Der Gleitkörper ist hierdurch stabil in der Führungsschiene aufnehmbar und führbar.

Zudem kann die Führungsvorrichtung durch die Verwendung der Anpressvorrichtung vorzugsweise einfach hergestellt werden.

Vorteilhaft kann es sein, wenn die Anpressvorrichtung ein oder mehrere Federelemente umfasst, mittels welchen das mindestens eine Paar von Gleitflächen des Gleitkörpers an das mindestens eine Paar von Anlageflächen der Führungsschiene anpressbar ist.

Ein oder mehrere Federelemente sind vorzugsweise als Einlegeteile zum Einlegen und/oder Einklemmen in einen Grundkörper des Gleitkörpers ausgebildet.

Ein Federelement kann beispielsweise ein metallisches Federelement sein.

Insbesondere kann vorgesehen sein, dass ein oder mehrere Federelemente aus Federstahl gebildet sind.

Ein oder mehrere Federelemente können beispielsweise als Blattfedern ausgebildet sein.

Alternativ oder ergänzend hierzu kann vorgesehen sein, dass ein oder mehrere Federelemente als Spiralfedern ausgebildet sind.

Günstig kann es sein, wenn ein oder mehrere Federelemente durch Formgebung eines elastischen Abschnitts eines Grundkörpers des Gleitkörpers gebildet sind.

Es kann vorgesehen sein, dass der Gleitkörper einen Grundkörper umfasst, welcher einen Basisabschnitt und einen oder mehrere Anpressabschnitte der Anpressvorrichtung umfasst.

Die Anpressabschnitte der Anpressvorrichtung sind vorzugsweise selbsttätig relativ zu dem Basisabschnitt bewegbar, insbesondere auslenkbar.

Vorzugsweise ist der Gleitkörper mit dem einen oder den mehreren Anpressabschnitten vorgespannt oder vorspannbar an der Führungsschiene angeordnet oder anordenbar.

Vorteilhaft kann es sein, wenn der eine oder die mehreren Anpressabschnitte eine oder mehrere Gleitflächen aufweisen.

Der Gleitkörper umfasst vorzugsweise einen Grundkörper, welcher einstückig ausgebildet ist.

Ferner kann vorgesehen sein, dass der Gleitkörper einen Grundkörper umfasst, welcher als Spritzguss-Kunststoffbauteil ausgebildet ist.

Der Gleitkörper ist beispielsweise aus einem spritzbaren, gleitenden und/oder selbstschmierenden Kunststoff ausgebildet.

Als Material für den Grundkörper kann insbesondere ein unverstärktes oder faserverstärktes Kunststoffmaterial, beispielsweise Polypropylen oder Polyamid, vorgesehen sein.

Mindestens eine Gleitfläche mindestens eines Paars von Gleitflächen ist vorzugsweise durch mehrere Gleitpunkte und/oder Gleitlinien gebildet. Auf diese Weise kann eine zuverlässige Anlage des Gleitkörpers an der Führungsschiene ermöglicht und zugleich eine Reibwirkung zwischen dem Gleitkörper und der Führungsschiene reduziert werden.

Vorzugsweise ist der Gleitkörper bezüglich mehrerer Ebenen an der Führungsschiene festgelegt oder festlegbar. In jeder dieser Ebenen liegt der Gleitkörper vorzugsweise an mindestens drei, insbesondere mindestens vier, Anlagepunkten oder Anlagelinien (Gleitpunkten oder Gleitlinien) an der Führungsschiene an. Hierdurch kann eine stabile Anordnung und Führung des Grundkörpers an der Führungsschiene gewährleistet werden.

Vorteilhaft kann es sein, wenn mindestens ein Paar von Gleitflächen des Gleitkörpers einander abgewandt angeordnete Gleitflächen aufweist.

Die zugehörigen Anlageflächen sind entsprechend vorzugsweise einander zugewandt angeordnet.

Bei einer derartigen Anordnung der Gleitflächen und der Anlageflächen umgreift die Führungsschiene vorzugsweise den Gleitkörper.

Alternativ oder ergänzend hierzu kann vorgesehen sein, dass mindestens ein Paar von Gleitflächen des Gleitkörpers einander zugewandt angeordnete Gleitflächen aufweist.

Die zugehörigen Anlageflächen des zugehörigen Paars von Anlageflächen sind entsprechend einander abgewandt angeordnet.

Bei einer derartigen Anordnung des Paars von Gleitflächen und des Paars von Anlageflächen umgreift der Gleitkörper vorzugsweise die Führungsschiene.

Die Führungsschiene kann dabei beispielsweise als T- oder I-Träger ausgebildet sein.

Vorteilhaft kann es sein, wenn die Führungsschiene einen oder mehrere im Wesentlichen C-förmige Aufnahmeabschnitte umfasst, welche vorzugsweise den Gleitkörper dreiseitig umgreifen.

Insbesondere kann vorgesehen sein, dass die Führungsschiene zwei im Wesentlichen C-förmige Aufnahmeabschnitte umfasst, welche im Wesentlichen spiegelsymmetrisch zueinander ausgebildet und/oder angeordnet sind.

Vorzugsweise sind zwei im Wesentlichen C-förmige Aufnahmeabschnitte einer Führungsschiene vorgesehen, wobei durch die C-Form gebildete Öffnungen der Aufnahmeabschnitte einander zugewandt angeordnet sind.

Die Führungsschiene kann einstückig oder mehrteilig ausgebildet sein. Insbesondere können die Aufnahmeabschnitte einstückig miteinander ausgebildet oder voneinander verschiedene Bauteile sein.

Bei einer Ausgestaltung der Erfindung kann vorgesehen sein, dass der Gleitkörper mehrere Paare von Gleitflächen umfasst, welche bezüglich unterschiedlicher Raumrichtungen einander gegenüberliegend angeordnet sind.

Die Raumrichtungen sind vorzugsweise quer, insbesondere im Wesentlichen senkrecht, zueinander ausgerichtet.

Ferner kann vorgesehen sein, dass die Raumrichtungen im Wesentlichen quer, insbesondere zumindest näherungsweise senkrecht, zur Führungsrichtung ausgerichtet sind.

Es kann vorgesehen sein, dass die Gleitflächen eines ersten Paars von Gleitflächen bezüglich einer ersten Raumrichtung einander gegenüberliegend angeordnet sind. Die Gleitflächen eines zweiten Paars von Gleitflächen sind vorzugsweise bezüglich einer zweiten Raumrichtung einander gegenüberliegend angeordnet. Die erste Raumrichtung und die zweite Raumrichtung sind vorzugsweise quer, insbesondere im Wesentlichen senkrecht, zueinander ausgerichtet. Ferner sind die erste Raumrichtung und die zweite Raumrichtung vorzugsweise im Wesentlichen senkrecht zur Führungsrichtung ausgerichtet.

Vorzugsweise umfasst der Gleitkörper Gleitflächen, welche in drei oder mehr voneinander verschiedenen Ebenen liegen.

Mindestens ein Paar von Gleitflächen ist an einem einstückig ausgebildeten Grundkörper des Gleitkörpers angeordnet.

Beispielsweise kann vorgesehen sein, dass zwei, drei oder mehr Paare von Gleitflächen, welche im Benutzungszustand der Führungsvorrichtung an voneinander verschiedenen Anlageflächen der Führungsschiene zur Anlage kommen, an einem einstückig ausgebildeten Grundkörper des Gleitkörpers angeordnet sind.

Ferner kann vorgesehen sein, dass der Grundkörper mehrere Gleitelemente umfasst, welche jeweils nur eine Gleitfläche eines Paars von Gleitflächen umfassen, und/oder welche jeweils ein oder mehrere Paare von Gleitflächen umfassen.

Die Gleitelemente sind vorzugsweise mittels eines oder mehrerer Verbindungselemente miteinander verbunden.

Insbesondere sind die Gleitelemente vorzugsweise beabstandet voneinander angeordnet.

Das eine oder die mehreren Verbindungselemente zur Verbindung der Gleitelemente sind vorzugsweise aus einem von den Gleitelementen verschiedenen Material, beispielsweise einem metallischen Material, insbesondere Stahl, gebildet.

Günstig kann es sein, wenn die Führungsvorrichtung eine oder mehrere Rastvorrichtungen umfasst, mittels welchen der Gleitkörper in einer oder mehreren Raststellungen relativ zu der Führungsschiene festlegbar ist.

Der Grundkörper umfasst vorzugsweise einen Rastvorsprung, welcher vorzugsweise mittels eines Federelements der Rastvorrichtung auslenkbar ist.

Insbesondere kann vorgesehen sein, dass der Grundkörper einen Rastvorsprung umfasst, welcher in eine Rastaufnahme der Führungsschiene einbringbar ist.

Eine Rastaufnahme der Führungsschiene kann beispielsweise als eine Einkerbung ausgebildet sein.

Die Führungsschiene umfasst vorzugsweise eine oder mehrere Rastaufnahmen, beispielsweise Einkerbungen.

Die eine oder die mehreren Rastaufnahmen, insbesondere Einkerbungen, sind vorzugsweise in einer oder mehreren Anlageflächen der Führungsschiene angeordnet, insbesondere in gleichmäßigen Abständen verteilt angeordnet.

Alternativ oder ergänzend zu einer Rastvorrichtung, bei welcher der Gleitkörper einen Rastvorsprung umfasst, welcher mit einer Rastaufnahme der Führungsschiene in Eingriff bringbar ist, kann vorgesehen sein, dass die Führungsvorrichtung eine Rastvorrichtung umfasst, bei welcher eine Rastaufnahme des Gleitkörpers mit einem oder mehreren Rastvorsprüngen der Führungsschiene in Eingriff bringbar ist.

Insbesondere kann vorgesehen sein, dass der Grundkörper des Gleitkörpers eine Rastaufnahme umfasst, in welcher ein Rastvorsprung der Führungsschiene aufnehmbar ist.

Der Grundkörper kann hierzu beispielsweise einen Rastkanal aufweisen, welcher vorzugsweise einen federnden Rastabschnitt umfasst. Der Rastabschnitt bildet vorzugsweise die Rastaufnahme zur Aufnahme eines Rastvorsprungs der Führungsschiene.

Ein Rastvorsprung der Führungsschiene kann beispielsweise durch Formgebung der Führungsschiene bei der Herstellung derselben ausgebildet werden. Alternativ hierzu kann vorgesehen sein, dass ein Rastvorsprung an der Führungsschiene festgelegt, beispielsweise angetaumelt, ist.

Die erfindungsgemäße Führungsvorrichtung eignet sich insbesondere zur Verwendung an Möbel- und/oder Maschinenteilen.

Insbesondere kann die Führungsvorrichtung im Fahrzeugbau zum Einsatz kommen. Beispielsweise kann eine bewegliche Mittelarmlehne, eine Stauraumabdeckung und/oder ein Schiebeelement mit einer solchen Führungsvorrichtung versehen sein.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform einer Führungsvorrichtung, bei welcher ein Gleitkörper gleitend verschiebbar an einer Führungsschiene der Führungsvorrichtung angeordnet ist, wobei der Gleitkörper einen einstückigen Grundkörper und zwei als Einlegeteile ausgebildete Federelemente umfasst;
- Fig. 2: eine schematische perspektivische Darstellung des Gleitkörpers und der Führungsschiene aus Fig. 1 im getrennten Zustand derselben;
- Fig. 3: eine schematische Draufsicht auf eine Oberseite der Führungsvorrichtung aus Fig. 1, wobei der Gleitkörper in einer alternativen Rastposition an der Führungsschiene angeordnet ist;
- Fig. 4: einen schematischen Schnitt durch die Führungsvorrichtung aus Fig. 1 längs der Linie 4 - 4 in Fig. 3;
- Fig. 5: eine vergrößerte Darstellung des Bereichs V in Fig. 3;
- Fig. 6: einen schematischen Schnitt durch den vergrößerten Abschnitt aus Fig. 5 längs der Linie 6 - 6 in Fig. 5;
- Fig. 7: eine vergrößerte Darstellung des Bereichs VII in Fig. 3;
- Fig. 8: eine schematische Seitenansicht des Gleitkörpers aus Fig. 1 mit Blickrichtung in Richtung des Pfeiles 8 in Fig. 2;
- Fig. 9: eine schematische perspektivische Darstellung des Gleitkörpers und eines noch einzufügenden Federelements einer Rastvorrichtung der Führungsvorrichtung;
- Fig. 10: eine schematische perspektivische Darstellung des Gleitkörpers und eines noch einzufügenden Federelements einer Anpressvorrichtung der Führungsvorrichtung;
- Fig. 11: eine schematische Darstellung einer Unterseite des Gleitkörpers und einer daran angeordneten Rastvorrichtung;
- Fig. 12: eine vergrößerte Darstellung des Bereichs XII in Fig. 11;
- Fig. 13: einen der Fig. 4 entsprechenden schematischen Querschnitt durch eine zweite Ausführungsform einer Führungsvorrichtung, bei welcher zwei mittels eines Verbindungselements miteinander verbundene Gleitelemente des Gleitkörpers vorgesehen sind;
- Fig. 14: eine schematische perspektivische Darstellung einer dritten Ausführungsform einer Führungsvorrichtung, bei welcher zwei Gleitkörper mit jeweils zwei Gleitelementen vorgesehen sind, wobei jeder Gleitkörper ein Verschlusselement zum Verschließen einer Zugangsöffnung bildet, wobei ein Gleitkörper mit einem Paar von einander abgewandt angeordneten Gleitflächen sowie ein Gleitkörper mit einem Paar von einander zugewandt angeordneten Gleitflächen vorgesehen sind;
- Fig. 15: einen schematischen Querschnitt durch die dritte Ausführungsform der Führungsvorrichtung aus Fig. 14;
- Fig. 16: eine der Fig. 14 entsprechende schematische perspektivische Darstellung einer vierten Ausführungsform einer Führungsvorrichtung, bei welcher zwei Gleitkörper vorgesehen sind, die ausschließlich Paare von einander abgewandt angeordneten Gleitflächen aufweisen; und
- Fig. 17: einen der Fig. 15 entsprechenden schematischen Querschnitt durch die vierte Ausführungsform der Führungsvorrichtung gemäß Fig. 16.

Gleiche oder funktional äquivalente Elemente sind in sämtlichen Figuren mit denselben Bezugszeichen versehen.

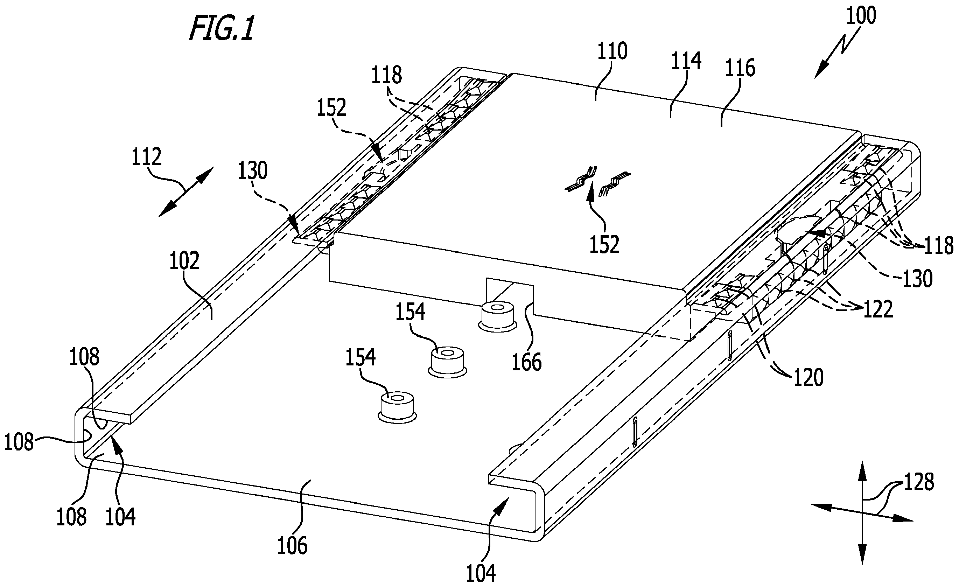

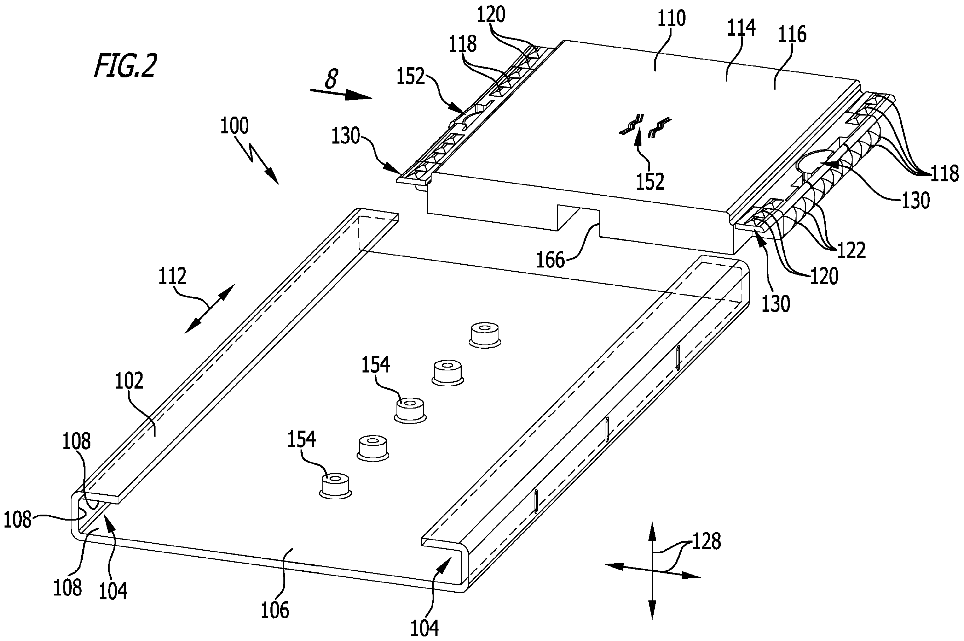

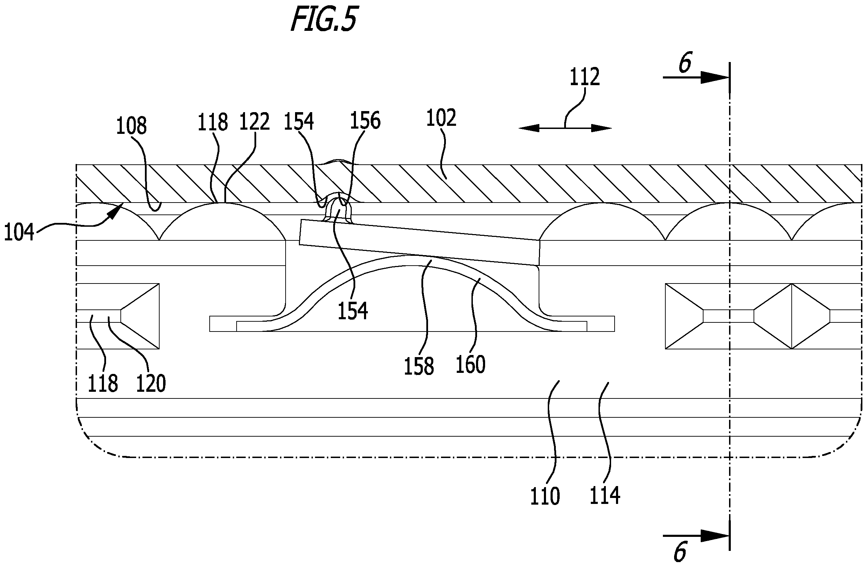

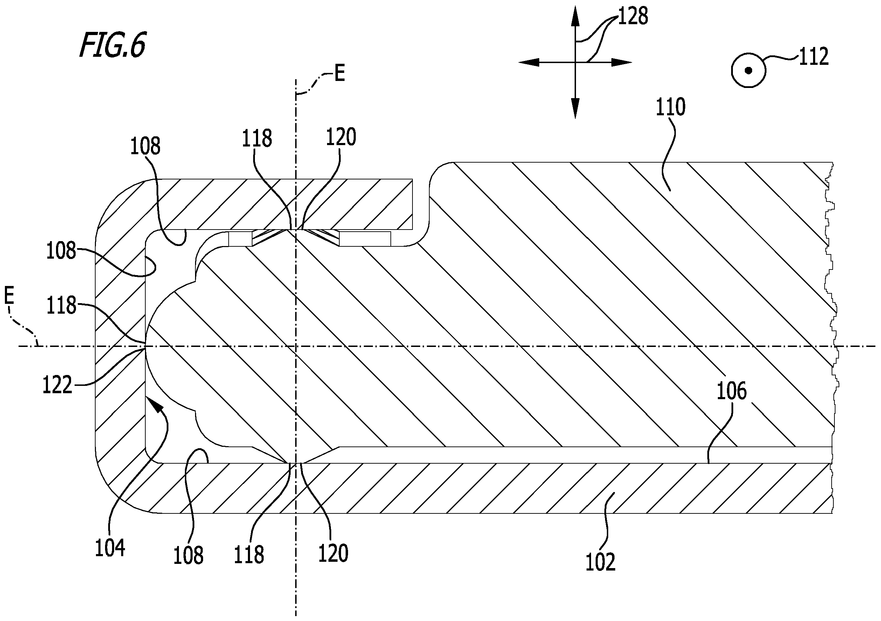

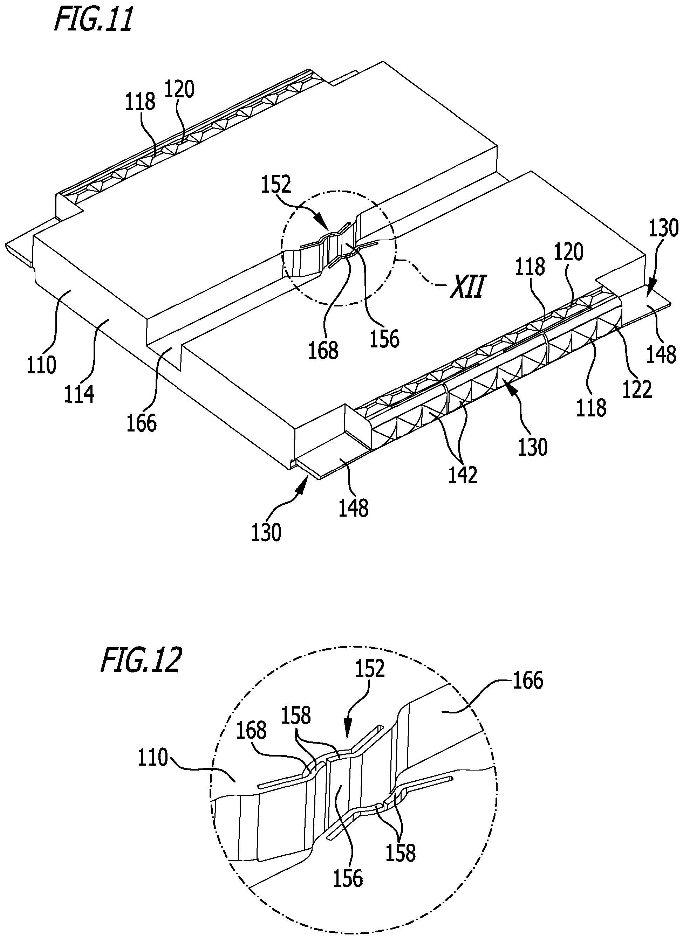

Eine in den Fig. 1 bis 12 dargestellte erste Ausführungsform einer als Ganzes mit 100 bezeichneten Führungsvorrichtung dient der beweglichen geführten Anordnung zweier Elemente relativ zueinander. Eine solche Führungsvorrichtung 100 kann insbesondere im Fahrzeugbau Anwendung finden, um Abdeckungen und sonstige Schiebeelemente einfach und zuverlässig in unterschiedliche Positionen bringen zu können.

Die Führungsvorrichtung 100 umfasst eine Führungsschiene 102.

Die Führungsschiene 102 ist beispielsweise ein Blechumformprodukt. Insbesondere kann vorgesehen sein, dass die Führungsschiene 102 aus einem Stahlblechmaterial gebildet ist.

Die Führungsschiene 102 umfasst vorzugsweise zwei Aufnahmeabschnitte 104 und einen die Aufnahmeabschnitte 104 miteinander verbindenden Schienenrücken 106.

Die Aufnahmeabschnitte 104 weisen einen im Wesentlichen C-förmigen Querschnitt auf und bilden Anlageflächen 108 für einen Gleitkörper 110 der Führungsvorrichtung 100.

Insbesondere ist der Gleitkörper 110 in den Aufnahmeabschnitten 104 der Führungsschiene 102 führbar aufnehmbar.

Der Gleitkörper 110 ist dabei insbesondere längs einer Führungsrichtung 112 der Führungsvorrichtung 100 in oder an der Führungsschiene 102 geführt bewegbar.

Der Gleitkörper 110 umfasst vorzugsweise einen Grundkörper 114.

Der Grundkörper 114 ist beispielsweise als ein einstückiges Spritzguss-Kunststoffbauteil 116 ausgebildet und erstreckt sich im montierten Zustand der Führungsvorrichtung 100 von einem Aufnahmeabschnitt 104 bis in den weiteren Aufnahmeabschnitt 104 der Führungsschiene 102.

Der Grundkörper 114 weist mehrere Gleitflächen 118 auf, mit welchen der Grundkörper 114 an den Anlageflächen 108 der Aufnahmeabschnitte 104 der Führungsschiene 102 anliegt.

Die Gleitflächen 118 sind dabei beispielsweise durch Gleitlinien 120 oder Gleitpunkte 122 gebildet. Der Grundkörper 114 weist hierzu insbesondere Vorsprünge auf, deren den Anlageflächen 108 zugewandte Enden linienförmig oder punktförmig ausgebildet sind.

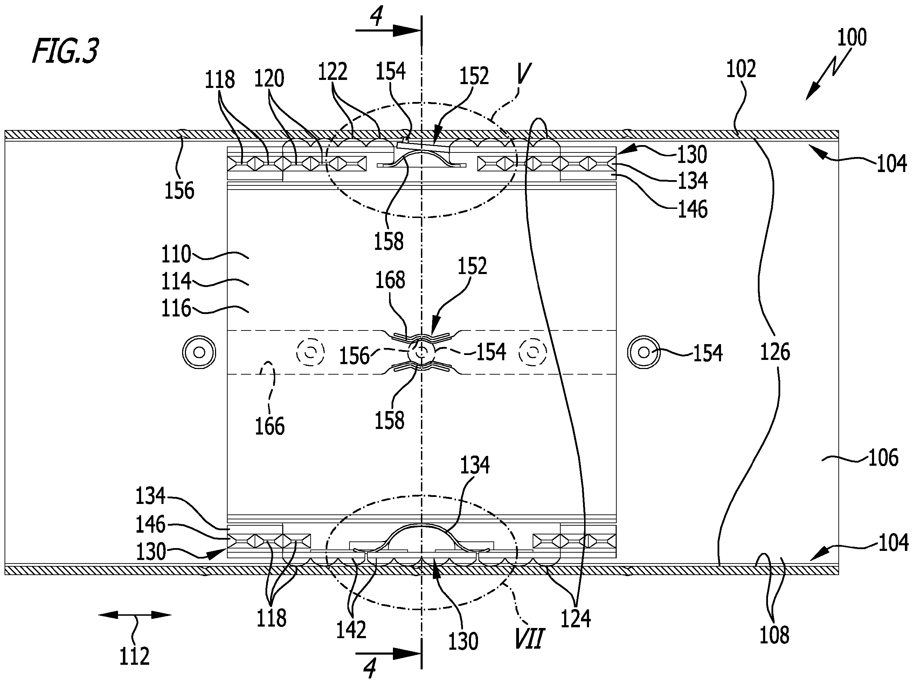

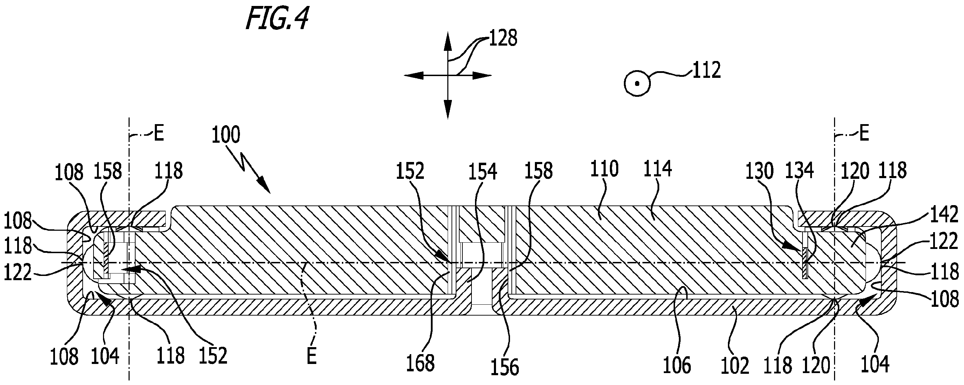

Wie insbesondere den Fig. 3 und 4 zu entnehmen ist, umfasst der Gleitkörper 110 mehrere Paare 124 von Gleitflächen 118.

Jedes Paar 124 von Gleitflächen 118 umfasst dabei zwei oder mehr einander gegenüberliegend angeordnete Gleitflächen 118.

Bei der in den Fig. 1 bis 12 dargestellten ersten Ausführungsform der Führungsvorrichtung 100 sind die Gleitflächen 118 eines jeden Paars 124 von Gleitflächen 118 auf einander abgewandten Seiten des Grundkörpers 114 angeordnet und somit selbst voneinander abgewandt.

Die zugehörigen Anlageflächen 108 der Führungsschiene 102 sind ebenfalls paarweise vorgesehen, um die Paare 124 von Gleitflächen 118 aufzunehmen.

Insbesondere sind somit Paare 126 von Anlageflächen 108 vorgesehen, welche einander gegenüberliegend angeordnete Anlageflächen 108 umfassen.

Die Anlageflächen 108 des Paars 126 von Anlageflächen 108 sind bei der in den Fig. 1 bis 12 dargestellten ersten Ausführungsform der Führungsvorrichtung 100 einander zugewandt angeordnet.

Zur stabilen Aufnahme des Gleitkörpers 110 in der Führungsschiene 102 sind beispielsweise drei Paare 124 von Gleitflächen 118 und entsprechend drei Paare 126 von Anlageflächen 108 vorgesehen.

Insbesondere bei im Wesentlichen punktförmigen oder linienförmigen Gleitflächen 118 liegen vorzugsweise sämtliche Gleitflächen 118 eines Paars 124 von Gleitflächen 118 in einer Ebene E.

Wie insbesondere Fig. 4 zu entnehmen ist, sind beispielsweise drei Ebenen E vorgesehen, wobei zwei der Ebenen E parallel zueinander verlaufen und senkrecht zu der dritten Ebene E angeordnet sind.

Jeweils eine Ebene E läuft dabei durch jeweils nur einen Aufnahmeabschnitt 104. Die weitere Ebene E schneidet beide Aufnahmeabschnitte 104.

Wie insbesondere Fig. 3 zu entnehmen ist, ist unter einem Paar 124 von Gleitflächen 118 die Anordnung von mehreren einander gegenüberliegend angeordneten Gleitflächen 118 zu verstehen, insbesondere unabhängig davon, wie viele einzelne Gleitflächen 118 auf jeder der Seiten angeordnet sind.

Bei der in den Fig. 1 bis 12 dargestellten ersten Ausführungsform der Führungsvorrichtung 100 sind beispielsweise bei einem Paar 124 von Gleitflächen 118 auf einer Seite acht Gleitflächen 118 und auf der weiteren Seite zehn Gleitflächen 118 vorgesehen (siehe Fig. 3). Unabhängig von der jeweiligen Anzahl handelt es sich dennoch um ein Paar 124 von Gleitflächen 118.

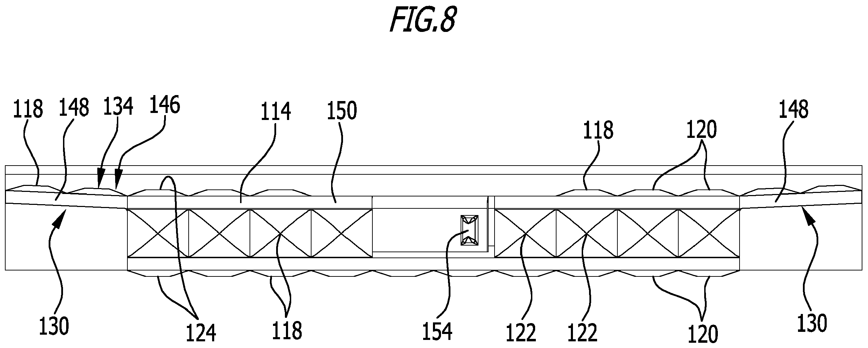

Wie ferner Fig. 8 zu entnehmen ist, kann es jedoch auch vorgesehen sein, dass ein Paar 124 von Gleitflächen 118 gleich viele Gleitflächen 118 pro Seite aufweist. So sind beispielsweise für ein Paar 124 von Gleitflächen 118, welches vollständig in einem der Aufnahmeabschnitte 104 der Führungsschiene 102 anordenbar ist, pro Seite jeweils zehn Gleitflächen 118 vorgesehen.

Wie insbesondere Fig. 4 zu entnehmen ist, sind die Gleitflächen 118 der drei Paare 124 von Gleitflächen 118 bezüglich unterschiedlicher Raumrichtungen 128 einander gegenüberliegend angeordnet. Diese Raumrichtungen 128 sind dabei im Wesentlichen senkrecht zur Führungsrichtung 112 ausgerichtet, so dass der Gleitkörper 110 längs der Führungsrichtung 112 in der Führungsschiene 102 verschiebbar ist.

Abhängig von der Materialwahl und der Ausgestaltung der Führungsschiene 102 und des Gleitkörpers 110 kann sich ein unerwünschtes Spiel zwischen den Gleitflächen 118 und den Anlageflächen 108 ergeben.

Um dieses Spiel zu verringern oder ganz zu vermeiden ist bei der in den Fig. 1 bis 12 dargestellten ersten Ausführungsform der Führungsvorrichtung 100 eine Anpressvorrichtung 130 vorgesehen.

Die Anpressvorrichtung 130 dient dem Anpressen von einander gegenüberliegend angeordneten Gleitflächen 118 eines oder mehrerer Paare 124 von Gleitflächen 118 an die zugehörigen Anlageflächen 108.

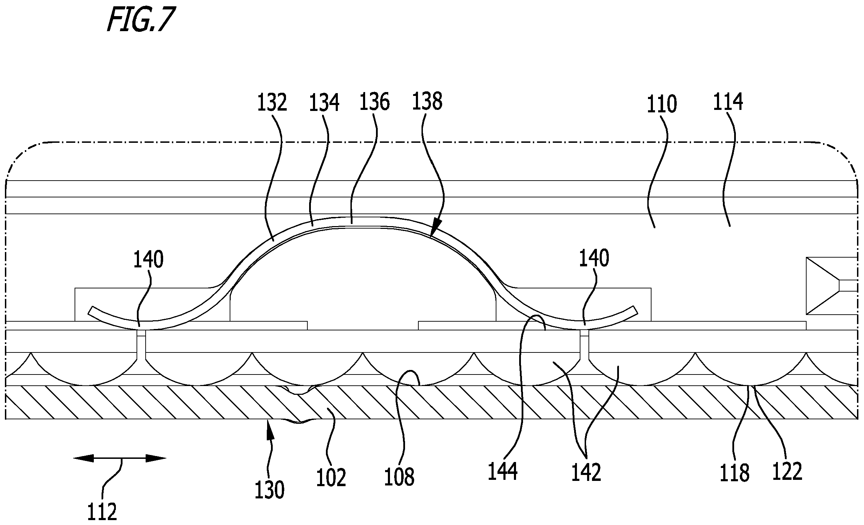

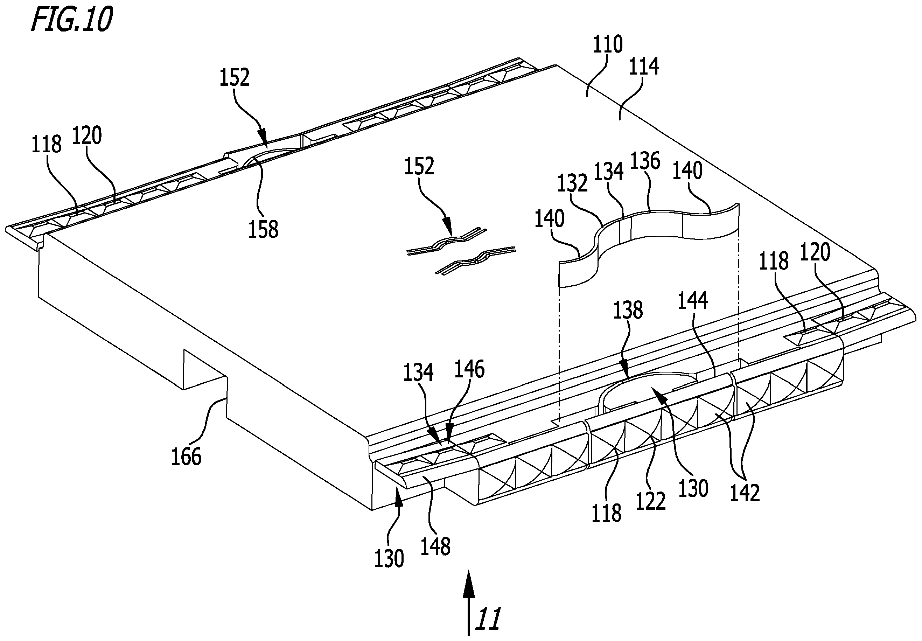

Wie insbesondere den Fig. 7 und 10 zu entnehmen ist, umfasst der Gleitkörper 110 ein als Einlegeteil 132 ausgebildetes Federelement 134, welches in dem Grundkörper 114 des Gleitkörpers 110 einbringbar, insbesondere einklemmbar, ist.

Das Federelement 134 ist insbesondere als Blattfeder 136 ausgebildet und in einer Aufnahmenut 138 in dem Grundkörper 114 anordenbar.

Das Federelement 134 umfasst einen oder mehrere federnde Abschnitte 140, welche auf jeweils einen oder mehrere Auslenkabschnitte 142 des Gleitkörpers 110 einwirken.

Die Auslenkabschnitte 142 sind insbesondere Auslenkabschnitte 142 des Grundkörpers 114 und weisen jeweils eine oder mehrere Gleitflächen 118 auf.

Ein federnder Abschnitt 140 des Federelements 134 wirkt vorzugsweise von einer den Gleitflächen 118 abgewandten Rückseite 144 auf die Auslenkabschnitte 142 ein, um die Auslenkabschnitte 142 und somit die Gleitflächen 118 in Richtung der Anlageflächen 108 zu pressen oder zu drücken.

Das Federelement 134 ist vorzugsweise mit Vorspannung an dem Grundkörper 114 montiert, so dass die Auslenkabschnitte 142 bevorzugt aus einer Ruhelage ausgelenkt und somit zuverlässig an die Anlageflächen 108 angedrückt oder angepresst werden können.

Die Anpressvorrichtung 130 kann mehrere Federelemente 134 für jedes Paar 124 von Gleitflächen 118 aufweisen.

Wie bei der in den Fig. 1 bis 12 dargestellten ersten Ausführungsform der Führungsvorrichtung 100 kann es jedoch auch ausreichend sein, lediglich eine Seite eines Paars 124 von Gleitflächen 118 mit einem Federelement 134 der Anpressvorrichtung 130 zu versehen, da der gesamte Gleitkörper 110 auch mit nur einem Federelement 134 bei geeigneter Dimensionierung zuverlässig zwischen den Anlageflächen 108 eingeklemmt und somit spielfrei geführt werden kann.

Wie insbesondere den Fig. 8 bis 11 zu entnehmen ist, kann die Führungsvorrichtung 100 ferner eine Anpressvorrichtung 130 umfassen, welche ein durch geeignete Formgebung und Materialwahl des Grundkörpers 114 des Gleitkörpers 110 gebildetes Federelement 134 umfasst.

Beispielsweise kann vorgesehen sein, dass ein elastischer Abschnitt 146 des Grundkörpers 114 vorgesehen ist, welcher beispielsweise einen Anpressabschnitt 148 bildet.

Der Anpressabschnitt 148 ist mit Gleitflächen 118 versehen und ragt beispielsweise schräg von einem Basisabschnitt 150 des Grundkörpers 114 weg.

Der Anpressabschnitt 148 ragt dabei insbesondere in diejenige Richtung von dem Basisabschnitt 150 weg, in welcher die Gleitflächen 118 an die Anlageflächen 108 angelegt werden.

Durch den elastischen Abschnitt 146 und die Formgebung des Anpressabschnitts 148 kann auch hierdurch eine zuverlässige Anlage der Gleitflächen 118 an die Anlageflächen 108 gewährleistet werden, wobei mittels des elastischen Abschnitts 146 vorzugsweise eine Vorspannung erzielt werden kann.

Pro Paar 124 von Gleitflächen 118 sind vorzugsweise zwei elastische Abschnitte 146 und Anpressabschnitte 148 vorgesehen, um eine gleichmäßige Anpresswirkung zu erzielen und ein unerwünschtes Verkippen des Grundkörpers 114 relativ zu der Führungsschiene 102 zu vermeiden.

Der Gleitkörper 110 der Führungsvorrichtung 100 ist relativ zur Führungsschiene 102 vorzugsweise in mehreren unterschiedlichen Positionen festlegbar, insbesondere arretierbar.

Die Führungsvorrichtung 100 umfasst hierzu eine oder mehrere Rastvorrichtungen 152 mittels welcher der Gleitkörper 110 und die Führungsschiene 102 miteinander verrastbar sind.

Die Rastvorrichtung 152 kann beispielsweise eine Rastvorrichtung 152 sein, bei welcher ein Rastvorsprung 154 des Gleitkörpers 110 in eine Rastaufnahme 156 der Führungsschiene 102 einbringbar ist.

Wie insbesondere den Fig. 3, 5, 8 und 9 zu entnehmen ist, ist bei einer solchen Rastvorrichtung 152 beispielsweise ein Federelement 158, insbesondere eine Blattfeder 160, vorgesehen, mittels welchem der Rastvorsprung 154 in Richtung der Rastaufnahme 156 gedrückt werden kann.

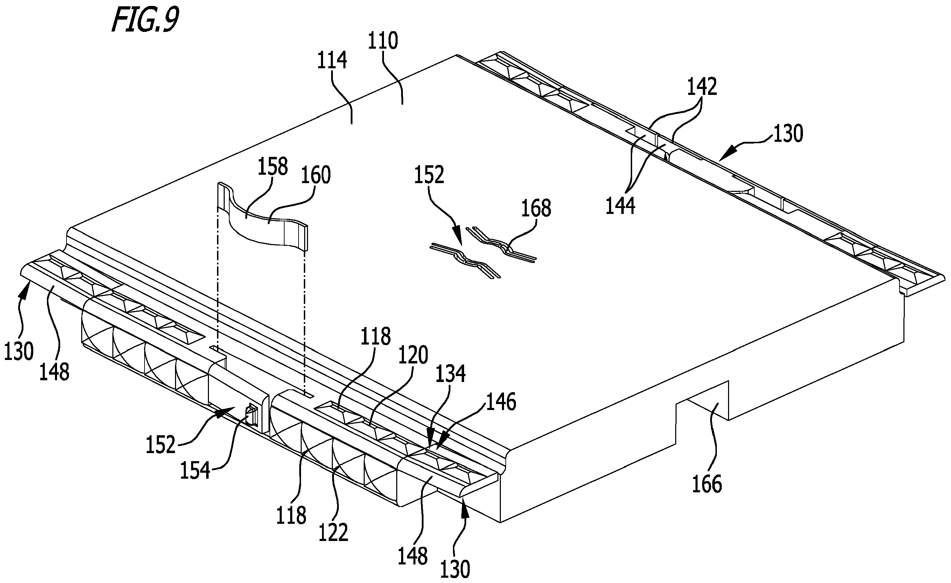

Das Federelement 158 ist hierzu insbesondere in eine zugehörige Federaufnahme 162 des Grundkörpers 114 des Gleitkörpers 110 einbringbar (siehe Fig. 9).

Die Rastaufnahme 156 ist beispielsweise als eine Einkerbung 164 in einer der Anlageflächen 108 der Führungsschiene 102 ausgebildet.

Vorzugsweise umfasst die Führungsschiene 102 mehrere solcher Einkerbungen 164, so dass der Gleitkörper 110 in unterschiedlichen Positionen verrastend an der Führungsschiene 102 festlegbar ist.

Alternativ oder ergänzend hierzu kann vorgesehen sein, dass die Rastvorrichtung 152 einen oder mehrere Rastvorsprünge 154 umfasst, welche an der Führungsschiene 102 angeordnet sind.

Die Rastvorsprünge 154 können beispielsweise durch geeignete Formgebung der Führungsschiene 102 ausgebildet oder als Zusatzbauteil an der Führungsschiene 102 angeordnet, beispielsweise angetaumelt, sein.

Die Rastvorsprünge 154 der Führungsschiene 102 sind beispielsweise längs der Führungsrichtung 112 verteilt und im Wesentlichen mittig zwischen den Aufnahmeabschnitten 104 an dem Schienenrücken 106 der Führungsschiene 102 angeordnet.

Die Rastvorsprünge 154 ragen insbesondere von dem Schienenrücken 106 in Richtung des Gleitkörpers 110 hervor.

Wie insbesondere den Fig. 1, 11 und 12 zu entnehmen ist, umfasst der Gleitkörper 110 einen Rastkanal 166, welcher eine Rastaufnahme 156 zur Aufnahme eines Rastvorsprungs 154 umfasst.

Die Rastaufnahme 156 ist insbesondere als ein Rastabschnitt 168 des Rastkanals 166 ausgebildet.

Die Rastaufnahme 156 ist dabei beispielsweise durch zwei oder mehr Federelemente 158 der Rastaufnahme 156 gebildet, zwischen welchen ein Rastvorsprung 154 rastend festlegbar ist.

Die Federelemente 158 sind beispielsweise durch geeignete Formgebung des Grundkörpers 114 des Gleitkörpers 110 gebildet und auf einander gegenüberliegenden Seiten des Rastkanals 166 angeordnet. Ein Abstand zwischen den beiden Federelementen 158 ist im Normalzustand (unverrastetem Zustand) der Führungsvorrichtung 100 vorzugsweise geringer als ein Außendurchmesser eines Rastvorsprungs 154 der Führungsschiene 102. Mittels des Rastvorsprungs 154 sind die Federelemente 158 der Rastaufnahme 156 somit auseinander bewegbar, wenn der Rastvorsprung 154 in die Rastaufnahme 156 hineinbewegt wird. In einer im Wesentlichen komplementär zu dem Rastvorsprung 154 ausgebildeten Vertiefung der Federelemente 158 ist der Rastvorsprung 154 dann in der Rastaufnahme 156 aufnehmbar, um letztlich den Gleitkörper 110 relativ zu der Führungsschiene 102 zu arretieren.

Der Rastabschnitt 168 ist bezüglich der Führungsrichtung 112 vorzugsweise mittig in dem Rastkanal 166 angeordnet. Hierdurch kann eine mittige Verrastung zur stabilen Arretierung des Gleitkörpers 110 relativ zur Führungsschiene 102 gewährleistet werden.

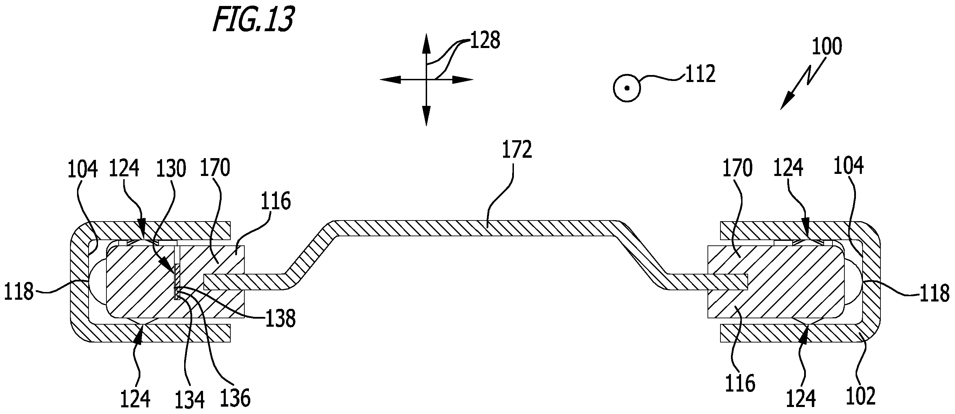

Eine in Fig. 13 dargestellte zweite Ausführungsform einer Führungsvorrichtung 100 unterscheidet sich von der in den Fig. 1 bis 12 dargestellten ersten Ausführungsform im Wesentlichen dadurch, dass der Gleitkörper 110 anstelle eines einstückigen Grundkörpers 114 zwei beabstandet voneinander angeordnete Gleitelemente 170 umfasst, an welchen die Gleitflächen 118 angeordnet sind.

Die Gleitelemente 170 sind mittels eines Verbindungselements 172 miteinander verbunden.

Die Führungsschiene 102 ist vorzugsweise ebenfalls zweiteilig ausgebildet.

Insbesondere ist vorzugsweise kein die Aufnahmeabschnitte 104 miteinander verbindender Schienenrücken 106 der Führungsschiene 102 vorgesehen.

Das Verbindungselement 172 kann beispielsweise aus einem von den Gleitelementen 170 verschiedenen Material gebildet sein.

Insbesondere kann vorgesehen sein, dass die Gleitelemente 170 als Spritzguss-Kunststoffbauteile 116 ausgebildet und an das Verbindungselement 172 angespritzt sind.

Jedes der Gleitelemente 170 umfasst ein vollständiges Paar 124 von Gleitflächen 118, bei welchem die Gleitflächen 118 auf einander gegenüberliegenden Seiten desselben Gleitelements 170 angeordnet sind.

Ferner umfasst jedes Gleitelement 170 Gleitflächen 118, welche gemeinsam mit Gleitflächen 118 des jeweils weiteren Gleitelements 170 ein Paar 124 von einander gegenüberliegend angeordneten Gleitflächen 118 bilden.

Im Übrigen stimmt die in Fig. 13 dargestellte zweite Ausführungsform der Führungsvorrichtung 100 hinsichtlich Aufbau und Funktion mit der in den Fig. 1 bis 12 dargestellten ersten Ausführungsform überein, so dass auf deren vorstehende Beschreibung insoweit Bezug genommen wird.

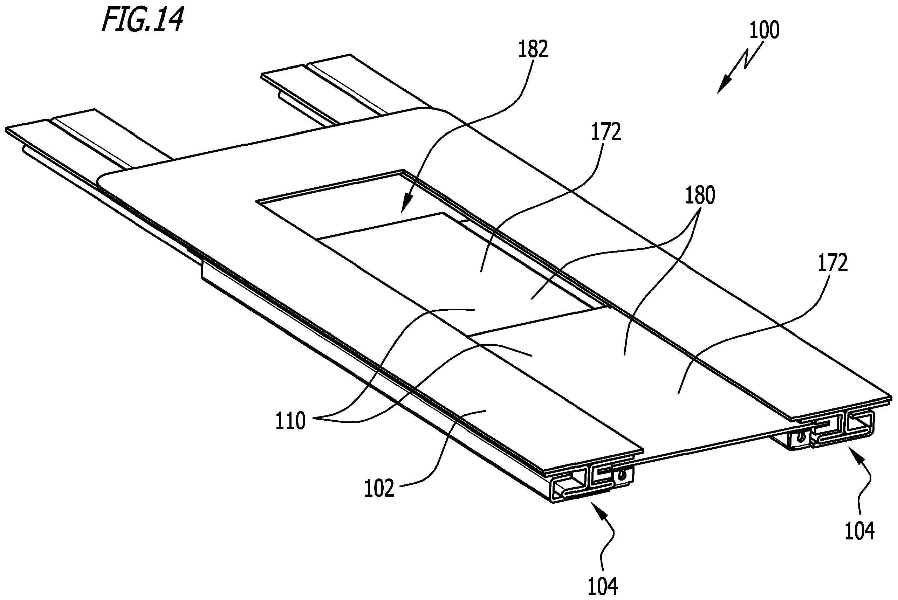

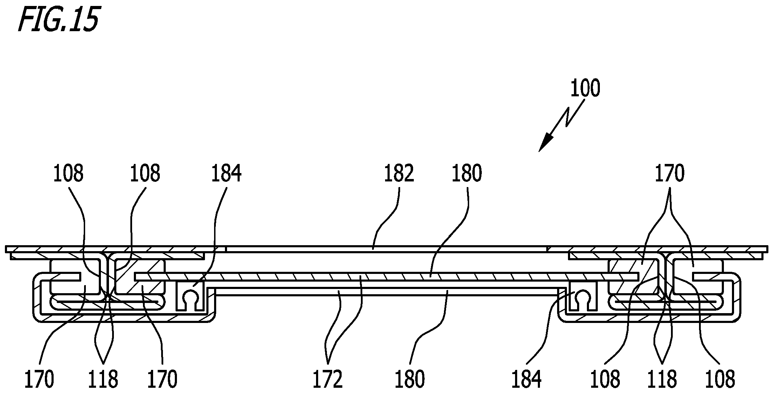

Eine in den Fig. 14 und 15 dargestellte dritte Ausführungsform einer Führungsvorrichtung 100 unterscheidet sich von der in Fig. 13 dargestellten zweiten Ausführungsform im Wesentlichen dadurch, dass die Führungsschiene 102 zwei im Wesentlichen I-förmige Aufnahmeabschnitte 104 umfasst. Mittels der Aufnahmeabschnitte 104 sind Anlageflächen 108 für zwei Gleitkörper 110 gebildet.

Insbesondere ist ein Gleitkörper 110 vorgesehen, welcher einander abgewandt angeordnete Gleitflächen 118 aufweist. Die zugehörigen Anlageflächen 108 der Führungsschiene 102 sind folglich einander zugewandt angeordnet. Dieser Gleitkörper 110 bildet ein erstes Verschlusselement 180 der Führungsvorrichtung 100.

Ein weiterer Gleitkörper 110 weist ein Paar 124 von einander zugewandt angeordneten Gleitflächen 118 auf, welche entsprechend mit einem Paar 126 von einander abgewandt angeordneten Anlageflächen 108 der Führungsschiene 102 in Eingriff bringbar sind. Dieser Gleitkörper 110 umgreift die Aufnahmeabschnitte 104 der Führungsschiene 102 im Wesentlichen C-förmig.

Auch der weitere Gleitkörper 110 bildet ein Verschlusselement 180, insbesondere ein zweites Verschlusselement 180.

Die beiden Verschlusselemente 180 dienen insbesondere dem Verschließen einer Zugangsöffnung 182, welche insbesondere in der Führungsschiene 102 ausgebildet ist.

Die Zugangsöffnung 182 ist dabei insbesondere mittels Verbindungselementen 172 der als Verschlusselemente 180 ausgebildeten Gleitkörper 110 abdeckbar.

Die beiden Gleitkörper 110 der in den Fig. 14 und 15 dargestellten dritten Ausführungsform der Führungsvorrichtung 100 sind relativ zueinander bewegbar.

Vorzugsweise sind die beiden Gleitkörper 110 unabhängig von einander an der Führungsschiene 102 bewegbar gelagert.

Es kann jedoch auch vorgesehen sein, dass die Führungsvorrichtung 100 eine Kopplungsvorrichtung 184 zur mechanischen Kopplung der beiden Gleitkörper 110 miteinander umfasst. Eine solche Kopplungsvorrichtung 184 kann beispielsweise eine (nicht dargestellte) Federvorrichtung oder Rastvorrichtung umfassen.

Die Kopplungsvorrichtung 184 kann insbesondere dazu dienen, bei der Betätigung eines der Gleitkörper 110 zugleich den weiteren Gleitkörper 110 zu betätigen, beispielsweise von einer Offenstellung in eine Schließstellung oder von einer Schließstellung in eine Offenstellung zu bringen.

Die Gleitkörper 110 sind vorzugsweise auf unterschiedlichen Ebenen angeordnet und somit aneinander vorbeibewegbar.

Im Übrigen stimmt die in den Fig. 14 und 15 dargestellte dritte Ausführungsform der Führungsvorrichtung 100 hinsichtlich Aufbau und Funktion mit der in Fig. 13 dargestellten zweiten Ausführungsform überein, so dass auf deren vorstehende Beschreibung insoweit Bezug genommen wird.

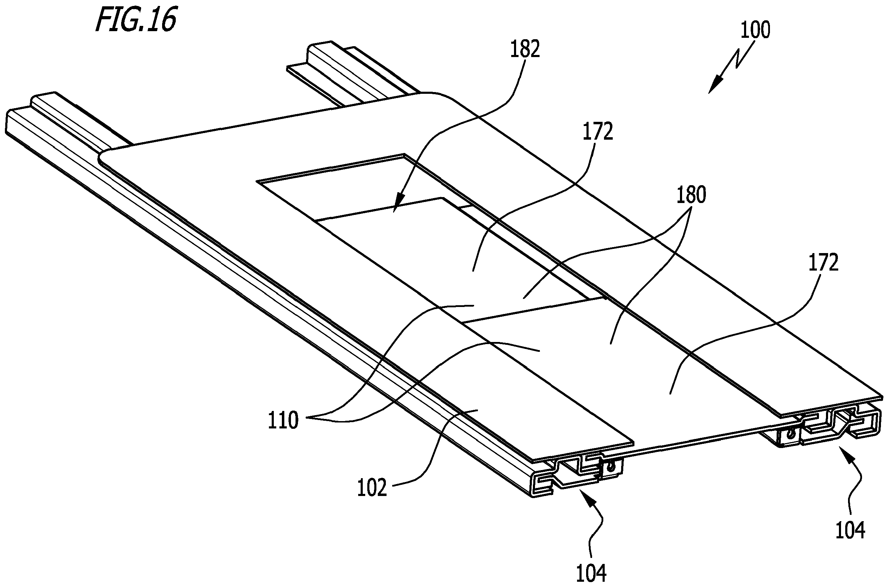

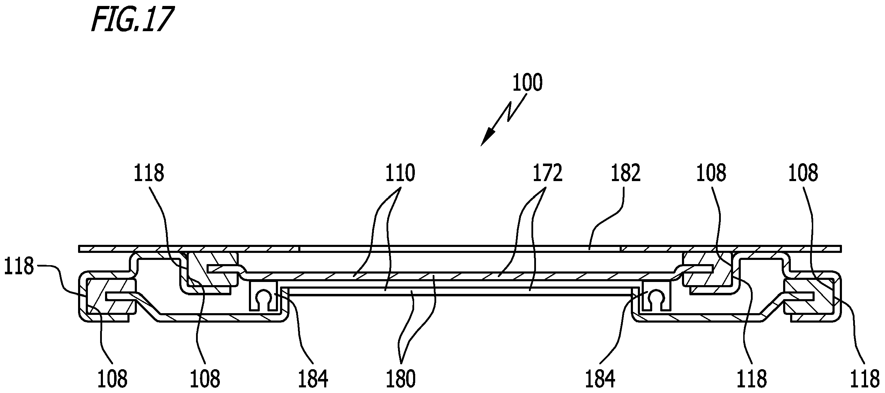

Eine in den Fig. 16 und 17 dargestellte vierte Ausführungsform einer Führungsvorrichtung 100 unterscheidet sich von der in den Fig. 14 und 15 dargestellten dritten Ausführungsform im Wesentlichen dadurch, dass die Führungsschiene 102 Aufnahmeabschnitte 104 umfasst, welche ausschließlich Paare 126 von einander zugewandt angeordneten Anlageflächen 108 bilden. Die Gleitkörper 110 weisen entsprechend ausschließlich Paare 124 von einander abgewandt angeordneten Gleitflächen 118 auf.

Im Übrigen stimmt die in den Fig. 16 und 17 dargestellte vierte Ausführungsform einer Führungsvorrichtung 100 hinsichtlich Aufbau und Funktion mit der in den Fig. 14 und 15 dargestellten dritten Ausführungsform überein, so dass auf deren vorstehende Beschreibung insoweit Bezug genommen wird.

## Patentansprüche

1. Führungsvorrichtung (100), umfassend eine Führungsschiene (102) und einen Gleitkörper (110), welcher längs einer Führungsrichtung (112) gleitend verschiebbar an der Führungsschiene (102) angeordnet ist, wobei der Gleitkörper (110) mindestens ein Paar (124) von einander gegenüberliegend angeordneten Gleitflächen (118) umfasst, mit welchen der Gleitkörper (110) an mindestens einem Paar (126) von einander gegenüberliegend angeordneten Anlageflächen (108) der Führungsschiene (102) anliegt,
wobei der Gleitkörper (110) eine Anpressvorrichtung (130) umfasst, mittels welcher das mindestens eine Paar (124) von Gleitflächen (118) des Gleitkörpers (110) an das mindestens eine Paar (126) von Anlageflächen (108) der Führungsschiene (102) anpressbar ist,
wobei ein oder mehrere Paare (124) von Gleitflächen (118) an einem einstückig ausgebildeten Grundkörper (114) des Gleitkörpers (110) angeordnet ist, wobei die Führungsschiene (102) zwei Aufnahmeabschnitte (104) und einen die Aufnahmeabschnitte (104) miteinander verbindenden Schienenrücken (106) aufweist, wobei die Aufnahmeabschnitte (104) einen im Wesentlichen C-förmigen Querschnitt aufweisen und Anlageflächen (108) für einen Gleitkörper (110) der Führungsvorrichtung (100) bilden, **dadurch gekennzeichnet, dass** der Grundkörper (114) die Gleitflächen (118) aufweist, mit welchen der Grundkörper (114) an den Anlageflächen (108) der Aufnahmeabschnitte (104) der Führungsschiene (102) anliegt.

2. Führungsvorrichtung (100) nach Anspruch 1, **dadurch gekennzeichnet, dass** die Anpressvorrichtung (130) ein oder mehrere Federelemente (134) umfasst, mittels welchen das mindestens eine Paar (124) von Gleitflächen (118) des Gleitkörpers (110) an das mindestens eine Paar (126) von Anlageflächen (108) der Führungsschiene (102) anpressbar ist.

3. Führungsvorrichtung (100) nach Anspruch 2, **dadurch gekennzeichnet, dass** ein oder mehrere Federelemente (134) als Einlegeteile (132) zum Einlegen und/oder Einklemmen in einen Grundkörper (114) des Gleitkörpers (110) ausgebildet sind.

4. Führungsvorrichtung (100) nach einem der Ansprüche 2 oder 3, **dadurch gekennzeichnet, dass** ein oder mehrere Federelemente (134) durch Formgebung eines elastischen Abschnitts (146) eines Grundkörpers (114) des Gleitkörpers (110) gebildet sind.

5. Führungsvorrichtung (100) nach einem der Ansprüche 1 bis 4, **dadurch gekennzeichnet, dass** der Gleitkörper (110) einen Grundkörper (114) umfasst, welcher einen Basisabschnitt (150) und einen oder mehrere Anpressabschnitte (148) der Anpressvorrichtung (130) umfasst, welche selbsttätig relativ zu dem Basisabschnitt (150) bewegbar, insbesondere auslenkbar, sind.

6. Führungsvorrichtung (100) nach einem der Ansprüche 1 bis 5, **dadurch gekennzeichnet, dass** der Grundkörper (114) als Spritzguss-Kunststoffbauteil (116) ausgebildet ist.

7. Führungsvorrichtung (100) nach einem der Ansprüche 1 bis 6, **dadurch gekennzeichnet, dass** mindestens eine Gleitfläche (118) mindestens eines Paars (124) von Gleitflächen (118) durch einen oder mehrere Gleitpunkte (122) und/oder eine oder mehrere Gleitlinien (120) gebildet ist.

8. Führungsvorrichtung (100) nach einem der Ansprüche 1 bis 7, **dadurch gekennzeichnet, dass** mindestens ein Paar (124) von Gleitflächen (118) des Gleitkörpers (110) einander abgewandt angeordnete Gleitflächen (118) aufweist.

9. Führungsvorrichtung (100) nach einem der Ansprüche 1 bis 8, **dadurch gekennzeichnet, dass** mindestens ein Paar (124) von Gleitflächen (118) des Gleitkörpers (110) einander zugewandt angeordnete Gleitflächen (118) aufweist.

10. Führungsvorrichtung (100) nach einem der Ansprüche 1 bis 9, **dadurch gekennzeichnet, dass** die Führungsschiene (102) einen oder mehrere im Wesentlichen C-förmige Aufnahmeabschnitte (104) umfasst.

11. Führungsvorrichtung (100) nach einem der Ansprüche 1 bis 10, **dadurch gekennzeichnet, dass** der Gleitkörper (110) mehrere Paare (124) von Gleitflächen (118) umfasst, welche bezüglich unterschiedlicher Raumrichtungen (128) einander gegenüberliegend angeordnet sind.

12. Führungsvorrichtung (100) nach einem der Ansprüche 1 bis 11, **dadurch gekennzeichnet, dass** die Führungsvorrichtung (100) eine Rastvorrichtung (152) umfasst, mittels welcher der Gleitkörper (110) in einer oder mehreren Raststellungen relativ zu der Führungsschiene (102) festlegbar ist.

13. Führungsvorrichtung (100) nach Anspruch 12, **dadurch gekennzeichnet, dass** der Grundkörper (114) einen Rastvorsprung (154) umfasst, welcher mittels eines Federelements (158) der Rastvorrichtung (152) auslenkbar ist.

14. Führungsvorrichtung (100) nach einem der Ansprüche 12 oder 13, **dadurch gekennzeichnet, dass** der Grundkörper (114) eine Rastaufnahme (156) umfasst, in welcher ein Rastvorsprung (154) der Führungsschiene (102) aufnehmbar ist.

## Claims

1. Guide device (100) comprising a guide rail (102) and a sliding body (110) which is displaceable in sliding manner on the guide rail (102) along a guide direction (112),
wherein the sliding body (110) comprises at least one pair (124) of mutually oppositely located sliding surfaces (118) with which the sliding body (110) rests on at least one pair (126) of mutually oppositely located contact surfaces (108) of the guide rail (102), wherein the sliding body (110) comprises a pressing device (130) by means of which the at least one pair (124) of sliding surfaces (118) of the sliding body (110) is pressable onto the at least one pair (126) of contact surfaces (108) of the guide rail (102),
wherein one or more pairs (124) of sliding surfaces (118) are arranged on a base body (114) of the sliding body (110) which is formed in one-piece manner, wherein the guide rail (102) comprises two seating sections (104) and a rail back (106) which connects the seating sections (104) to one another, wherein the seating sections (104) have a substantially C-shaped cross section and form contact surfaces (108) for a sliding body (110) of the guide device (100), **characterized in that** the base body (114) comprises the sliding surfaces (118) with which the base body (114) rests on the contact surfaces (108) of the seating sections (104) of the guide rail (102).

2. Guide device (100) in accordance with Claim 1, **characterized in that** the pressing device (130) comprises one or more spring elements (134) by means of which the at least one pair (124) of sliding surfaces (118) of the sliding body (110) is pressable onto the at least one pair (126) of contact surfaces (108) of the guide rail (102).

3. Guide device (100) in accordance with Claim 2, **characterized in that** one or more spring elements (134) are in the form of insert parts (132) for the purposes of insertion into and/or clamping in a base body (114) of the sliding body (110).

4. Guide device (100) in accordance with either of the Claims 2 or 3, **characterized in that** one or more spring elements (134) are formed by a process of shaping a resilient section (146) of a base body (114) of the sliding body (110).

5. Guide device (100) in accordance with any of the Claims 1 to 4, **characterized in that** the sliding body (110) comprises a base body (114) which comprises a basic section (150) and one or more pressing sections (148) of the pressing device (130) which are moveable, and in particular deflectable, automatically relative to the basic section (150).

6. Guide device (100) in accordance with any of the Claims 1 to 5, **characterized in that** the base body (114) is in the form of an injection moulded plastics material component (116).

7. Guide device (100) in accordance with any of the Claims 1 to 6, **characterized in that** at least one sliding surface (118) of at least one pair (124) of sliding surfaces (118) is formed by one or more sliding points (122) and/or one or more sliding lines (120).

8. Guide device (100) in accordance with any of the Claims 1 to 7, **characterized in that** at least one pair (124) of sliding surfaces (118) of the sliding body (110) comprises mutually remote sliding surfaces (118).

9. A guide device (100) in accordance with any of the Claims 1 to 8, **characterized in that** at least one pair (124) of sliding surfaces (118) of the sliding body (110) comprises mutually facing sliding surfaces (118).

10. Guide device (100) in accordance with any of the Claims 1 to 9, **characterized in that** the guide rail (102) comprises one or more substantially C-shaped seating sections (104).

11. Guide device (100) in accordance with any of the Claims 1 to 10, **characterized in that** the sliding body (110) comprises a plurality of pairs (124) of sliding surfaces (118) which are arranged opposite each other with respect to different spatial directions (128).

12. Guide device (100) in accordance with any of the Claims 1 to 11, **characterized in that** the guide device (100) comprises a latching device (152) by means of which the sliding body (110) is fixable relative to the guide rail (102) in one or more latching positions.

13. Guide device (100) in accordance with Claim 12, **characterized in that** the base body (114) comprises a latching projection (154) which is deflectable by means of a spring element (158) of the latching device (152).

14. Guide device (100) in accordance with either of the Claims 12 or 13, **characterized in that** the base body (114) comprises a latch seating (156) in which a latching projection (154) of the guide rail (102) is receivable.

## Revendications

1. Dispositif de guidage (100), comprenant un rail de guidage (102) et un corps de glissement (110), lequel est disposé au niveau du rail de guidage (102) de manière à pouvoir coulisser par glissement le long d'une direction de guidage (112), dans lequel le corps de glissement (110) comprend au moins une paire (124) de surfaces de glissement (118) disposées de manière à se faire face les unes les autres, avec lesquelles le corps de glissement (110) repose au niveau d'au moins une paire (126) de surfaces d'appui (108) du rail de guidage (102) disposées de manière à se faire face les unes les autres,
dans lequel le corps de glissement (110) comprend un dispositif de compression (130), au moyen duquel l'au moins une paire (124) de surfaces de glissement (118) du corps de glissement (110) peut être pressée contre l'au moins une paire (126) de surfaces d'appui (108) du rail de guidage (102),
dans lequel une ou plusieurs paires (124) de surfaces de glissement (118) sont disposées au niveau d'un corps de base (114) du corps de glissement (110) réalisé d'un seul tenant , dans lequel le rail de guidage (102) présente deux sections de logement (104) et une partie arrière de rail (106) reliant entre elles les sections de logement (104), dans lequel les sections de logement (104) présentent une section transversale sensiblement en forme de C et forment des surfaces d'appui (108) pour un corps de glissement (110) du dispositif de guidage (100), **caractérisé en ce que** le corps de base (114) présente les surfaces de glissement (118), avec lesquelles le corps de base (114) repose au niveau des surfaces d'appui (108) des sections de logement (104) du rail de guidage (102).

2. Dispositif de guidage (100) selon la revendication 1, **caractérisé en ce que** le dispositif de compression (130) comprend un ou plusieurs éléments de ressort (134), au moyen desquels l'au moins une paire (124) de surfaces de glissement (118) du corps de glissement (110) peut être pressée contre l'au moins une paire (126) de surfaces d'appui (108) du rail de guidage (102).

3. Dispositif de guidage (100) selon la revendication 2, **caractérisé en ce qu'**un ou plusieurs éléments de ressort (134) sont réalisés sous la forme de parties d'insertion (132) destinées à être insérées et/ou coincées dans un corps de base (114) du corps de glissement (110).

4. Dispositif de guidage (100) selon l'une quelconque des revendications 2 ou 3, **caractérisé en ce qu'**un ou plusieurs éléments de ressort (134) sont formés par façonnage d'une section (146) élastique d'un corps de base (114) du corps de glissement (110).

5. Dispositif de guidage (100) selon l'une quelconque des revendications 1 à 4, **caractérisé en ce que** le corps de glissement (110) comprend un corps de base (114), lequel comprend une section de base (150) et une ou plusieurs sections de compression (148) du dispositif de compression (130), lesquelles peuvent être déplacées, en particulier déviées, de manière autonome par rapport à la section de base (150).

6. Dispositif de guidage (100) selon l'une quelconque des revendications 1 à 5, **caractérisé en ce que** le corps de base (114) est réalisé sous la forme d'un composant en matière plastique obtenu par moulage par injection (116).

7. Dispositif de guidage (100) selon l'une quelconque des revendications 1 à 6, **caractérisé en ce qu'**au moins une surface de glissement (118) d'au moins une paire (124) de surfaces de glissement (118) est formée par un ou plusieurs points de glissement (122) et/ou une ou plusieurs lignes de glissement (120).

8. Dispositif de guidage (100) selon l'une quelconque des revendications 1 à 7, **caractérisé en ce qu'**au moins une paire (124) de surfaces de glissement (118) du corps de glissement (110) présente des surfaces de glissement (118) disposées de manière opposée les unes aux autres.

9. Dispositif de guidage (100) selon l'une quelconque des revendications 1 à 8, **caractérisée en ce qu'**au moins une paire (124) de surfaces de glissement (118) du corps de glissement (110) présente des surfaces de glissement (118) disposées de manière à se faire face les unes aux autres.

10. Dispositif de guidage (100) selon l'une quelconque des revendications 1 à 9, **caractérisé en ce que** le rail de guidage (102) comprend une ou plusieurs sections de logement (104) sensiblement en forme de C.

11. Dispositif de guidage (100) selon l'une quelconque des revendications 1 à 10, **caractérisé en ce que** le corps de glissement (110) comprend plusieurs paires (124) de surfaces de glissement (118), lesquelles sont disposées de manière à se faire face les unes les autres par rapport à différentes directions spatiales (128).

12. Dispositif de guidage (100) selon l'une quelconque des revendications 1 à 11, **caractérisé en ce que** le dispositif de guidage (100) comprend un dispositif d'enclenchement (152), au moyen duquel le corps de glissement (110) peut être fixé dans une ou plusieurs positions d'enclenchement par rapport au rail de guidage (102).

13. Dispositif de guidage (100) selon la revendication 12, **caractérisé en ce que** le corps de base (114) comprend une partie faisant saillie d'enclenchement (154), laquelle peut être déviée au moyen d'un élément de ressort (158) du dispositif d'enclenchement (152).

14. Dispositif de guidage (100) selon l'une quelconque des revendications 12 ou 13, **caractérisé en ce que** le corps de base (114) comprend un logement à enclenchement (156), dans lequel une partie faisant saillie d'enclenchement (154) du rail de guidage (102) peut être logée.
